(19) Europäisches Patentamt
European Patent Office
Office européen des brevets

(11) **EP 3 743 992 B1**

(12) **EUROPÄISCHE PATENTSCHRIFT**

(45) Veröffentlichungstag und Bekanntmachung des Hinweises auf die Patenterteilung:
**05.01.2022 Patentblatt 2022/01**

(51) Int Cl.:
*H02M 7/5395* (2006.01)  *H02M 7/5387* (2007.01)
*H02P 27/08* (2006.01)

(21) Anmeldenummer: **18807996.6**

(22) Anmeldetag: **23.11.2018**

(86) Internationale Anmeldenummer:
**PCT/EP2018/082391**

(87) Internationale Veröffentlichungsnummer:
**WO 2019/145068 (01.08.2019 Gazette 2019/31)**

(54) **VERFAHREN UND VORRICHTUNG ZUM BETREIBEN EINER MEHRPHASIGEN ELEKTRISCHEN MASCHINE**

METHOD AND DEVICE FOR OPERATING A MULTI-PHASE ELECTRICAL MACHINE

PROCÉDÉ ET DISPOSITIF POUR FAIRE FONCTIONNER UNE MACHINE ÉLECTRIQUE POLYPHASÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.01.2018 DE 102018201072**

(43) Veröffentlichungstag der Anmeldung:
**02.12.2020 Patentblatt 2020/49**

(73) Patentinhaber: **Robert Bosch GmbH**
**70442 Stuttgart (DE)**

(72) Erfinder: **MAUER, Jakob**
**74343 Sachsenheim (DE)**

(56) Entgegenhaltungen:
EP-A2- 0 658 969   JP-A- 2009 100 613
US-A1- 2006 267 542   US-A1- 2010 007 300
US-A1- 2012 212 167   US-A1- 2014 070 755
US-A1- 2017 349 059

EP 3 743 992 B1

**Beschreibung**

Die vorliegende Erfindung betrifft ein Verfahren zum Betreiben einer mehrphasigen elektrischen Maschine sowie eine Vorrichtung zum Betreiben einer mehrphasigen elektrischen Maschine. Bei der mehrphasigen elektrischen Maschine kann es sich insbesondere um eine drei-phasige, eine sechs-phasige oder eine neun-phasige elektrische Maschine handeln. Bei der mehrphasigen elektrischen Maschine kann es sich um einen mehrphasigen elektrischen Antrieb handeln.

Die Erfindung betrifft somit insbesondere ein Verfahren und eine Vorrichtung zum Betreiben eines mehrphasigen elektrischen Antriebs, insbesondere eines Elektrofahrzeugs oder eines Hybridfahrzeugs (Englisch: "hybrid electric vehicle", HEV), insbesondere eines Plug-in-Hybrids (Englisch: "plug-in-hybrid electric vehicle", PHEV).

Stand der Technik

Mehrphasige elektrische Maschinen werden üblicherweise über Wechselrichter, welche auch Inverter oder Inverterschaltungen genannt werden, mit für den Betrieb der elektrischen Maschine angepassten Modulationsfunktionen für jede der elektrischen Phasen versorgt. Hierbei wird herkömmlicherweise ein Arbeitspunkt für die mehrphasige elektrische Maschine in Abhängigkeit von einem gewünschten Drehmoment der elektrischen Maschine sowie einer elektrischen Frequenz der elektrischen Maschine eingestellt. Der jeweils eingestellte Arbeitspunkt beinhaltet eine feste Schaltfrequenz für die Pulsbreitenmodulation zum Realisieren der gewünschten Modulationsfunktionsverläufe sowie ein Ansteuerverfahren.

Beispielsweise kann bei kleinen und mittleren elektrischen Frequenzen $f_{el}$ eine Raumzeigermodulation (Englisch "space vector pulse-width modulation", SVPWM) angewendet werden, bei höheren elektrischen Frequenzen $f_{el}$ kann eine synchrone Taktung verwendet werden und dergleichen mehr.

Die Schaltfrequenz wird dabei für gewöhnlich so gewählt, dass eine Balance eingehalten wird zwischen einerseits geringen Abweichungen der realen elektrischen Phasen von den gewünschten Modulationsfunktionsverläufen, wofür eine besonders kleine Schaltfrequenz vorteilhaft ist, und andererseits möglichst geringen Schaltungsverlusten, wofür eine möglichst große Schaltfrequenz vorteilhaft ist.

In der DE 10 2012 220 247 A1 sind eine beispielhafte Inverterschaltung von elektrischem Antrieb, ein Elektrofahrzeug mit einer Inverterschaltung sowie ein Verfahren zum Betrieb einer Inverterschaltung beschrieben.

Grundelemente der Leistungselektronik sind beispielsweise aus Joachim Specovius: "Grundkurs Leistungselektronik: Bauelemente, Schaltungen und Systeme"; Springer Vieweg; Auflage: 8 (24. Januar 2017); ISBN-10: 3658169109 bekannt.

Die Druckschriften EP 0 658 969 A2, US 2006 / 267 542 A1, JP 2009 100 613 A, US 2010 / 007 300 A1, US 2017 / 349 059 A1, US 2012 / 212 167 A1 und US 2014 / 070 755 A1 offenbaren Spannungswandler und Verfahren zum Betrieb der Spannungswandler.

Es wird stets gewünscht, eine Leistungselektronik und ein entsprechendes Betriebsverfahren bereitzustellen, welche das Betreiben einer mehrphasigen elektrischen Maschine optimieren.

Offenbarung der Erfindung

Die vorliegende Erfindung offenbart ein Verfahren mit den Merkmalen des Patentanspruchs 1 und eine Vorrichtung mit den Merkmalen des Patentanspruchs 9.

Demgemäß ist vorgesehen: Ein Verfahren zum Betreiben einer mehrphasigen elektrischen Maschine, mit den Schritten:

Bestimmen eines Arbeitspunkts der mehrphasigen elektrischen Maschine;

Bestimmen, für eine Pulsbreitenmodulation für jede der elektrischen Phasen der mehrphasigen elektrischen Maschine, einer vorläufigen Schaltfrequenz in Abhängigkeit von dem bestimmten Arbeitspunkt der mehrphasigen elektrischen Maschine;

Bestimmen je eines Modulationsfunktionsverlaufs für die Pulsbreitenmodulation für jede der elektrischen Phasen der mehrphasigen elektrischen Maschine;

Bestimmen mindestens eines Zeitabschnitts in den Modulationsfunktionsverläufen in Abhängigkeit von den Werten der vorläufigen Modulationsfunktionsverläufe in dem Zeitabschnitt;

Verändern der vorläufigen Schaltfrequenz der Pulsbreitenmodulation hin zu einer modifizierten Schaltfrequenz in dem mindestens einen bestimmten Zeitabschnitt; und

Erzeugen eines Schaltsignals für jede der elektrischen Phasen durch Pulsbreitenmodulation basierend auf den bestimmten Modulationsfunktionsverläufen unter Verwendung der modifizierten Schaltfrequenz in dem mindestens einen bestimmten Zeitabschnitt, wobei das Bestimmen des mindestens einen Zeitabschnitts basierend auf mindestens einer Differenz zwischen mindestens zwei Modulationsfunktionsverläufen erfolgt.

Der Begriff der Modulationsfunktion, deren zeitlicher Verlauf vorliegend betrachtet und modifiziert wird, wird beispielsweise in Abschnitt 13.1.4 des eingangs zitierten Buchs "Grundkurs Leistungselektronik: Bauelemente, Schaltungen und Systeme" ausführlich erläutert. Die Modulationsfunktion kann als ein kurzzeitiger Spannungs-Mittelwert einer Zwischenkreisspannung über eine Schaltperiode hinweg bezeichnet werden.

Der mindestens eine Zeitabschnitt, welcher bestimmt wird, und in welchem die Schaltfrequenz verändert oder modifiziert wird, kann auch als "Modifikationszeitabschnitt" bezeichnet werden.

Weiterhin ist eine Vorrichtung zum Betreiben einer mehrphasigen elektrischen Maschine vorgesehen mit: einer Recheneinrichtung, welche ausgebildet ist zum:

Bestimmen eines Arbeitspunkts der mehrphasigen elektrischen Maschine;
Bestimmen, für eine Pulsbreitenmodulation für jede der elektrischen Phasen der mehrphasigen elektrischen Maschine, einer vorläufigen Schaltfrequenz in Abhängigkeit von dem bestimmten Arbeitspunkt der mehrphasigen elektrischen Maschine;
Bestimmen je eines Modulationsfunktionsverlaufs für die Pulsbreitenmodulation für jede der elektrischen Phasen der mehrphasigen elektrischen Maschine;
Bestimmen mindestens eines Zeitabschnitts in den Modulationsfunktionsverläufen in Abhängigkeit von den Werten der vorläufigen Modulationsfunktionsverläufe in dem Zeitabschnitt; Verändern der vorläufigen Schaltfrequenz der Pulsbreitenmodulation hin zu einer modifizierten Schaltfrequenz in dem mindestens einen bestimmten Zeitabschnitt; einer Schaltungseinrichtung, welche dazu ausgebildet ist, den Modulationsfunktionsverlauf für jede der elektrischen Phasen der mehrphasigen elektrischen Maschine durch die Pulsbreitenmodulation zu realisieren; und einer Signalerzeugungseinrichtung zum Erzeugen eines Schaltsignals für die Schaltungseinrichtung für die Pulsbreitenmodulation für jede der elektrischen Phasen basierend auf den bestimmten Modulationsfunktionsverläufen unter Verwendung der modifizierten Schaltfrequenz in dem mindestens einen bestimmten Zeitabschnitt, wobei das Bestimmen des mindestens einen Zeitabschnitts basierend auf mindestens einer Differenz zwischen mindestens zwei Modulationsfunktionsverläufen erfolgt.

Die Vorrichtung zum Betreiben der mehrphasigen elektrischen Maschine ist auch als Inverter oder als Inverterschaltung bezeichenbar.

Die Erfindung stellt weiterhin ein Fahrzeug bereit, welches eine erfindungsgemäße Vorrichtung zum Betreiben einer mehrphasigen elektrischen Maschine sowie die zu betreibende elektrische Maschine umfasst. Bei der zu betreibenden mehrphasigen elektrischen Maschine kann es sich insbesondere um einen Antrieb des Fahrzeugs handeln. Bei dem Fahrzeug kann es sich insbesondere um ein Hybridfahrzeug (HEV) oder einen Plug-in-Hybrid (PHEV) handeln.

Vorteile der Erfindung

Die der vorliegenden Erfindung zugrunde liegende Erkenntnis besteht darin, dass die Schaltfrequenz für die Pulsbreitenmodulation einen zusätzlichen, bisher nicht berücksichtigten Freiheitsgrad beim Ansteuern oder Betreiben einer mehrphasigen elektrischen Maschine darstellt.

Durch das Verändern der ursprünglichen, vorläufigen Schaltfrequenz, wie sie herkömmlicherweise eingestellt wird, hin zu einer modifizierten Schaltfrequenz unter bestimmten Bedingungen und für bestimmte Zeiträume, kann eine Verlustleistung für eine elektrische Maschine, insbesondere für einen Antrieb, verringert oder minimiert werden.

Mit anderen Worten besteht ein Kerngedanke der Erfindung darin, dass die Schaltfrequenz für eine Pulsbreitenmodulation für einen Betrieb der elektrischen Maschine nicht über eine Schaltperiode $1/f_{el}$ hinweg fest ist, sondern zumindest einmal modifiziert wird.

Es wurde nämlich erkannt, dass sich durch die relative Beziehung der Werte der Modulationsfunktionsverläufe zueinander solche Zeitabschnitte identifizieren bzw. bestimmen lassen, in welchen das Verändern der vorläufigen Schaltfrequenz besonders vorteilhaft ist.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung erfolgt das Bestimmen des mindestens einen Zeitabschnitts basierend auf allen möglichen Differenzen zwischen je zwei Modulationsfunktionsverläufen. Auf diese Weise können möglichst viele Zeitabschnitte bestimmt werden, in denen die vorläufige Schaltfrequenz hin zu der modifizierten Schaltfrequenz verändert wird. Somit kann insgesamt eine weitere Reduzierung der Verlustleistung bzw. der Schaltungsverluste realisiert werden.

Gemäß einer weiteren bevorzugten Weiterbildung wird, als der mindestens eine bestimmte Zeitabschnitt ("Modifikationszeitabschnitt"), jeder Zeitabschnitt bestimmt, in welchem eine beliebige Differenz zwischen zwei beliebigen Modulationsfunktionsverläufen einen Absolutbetrag (abs) kleiner oder gleich ($\leq$) einem Schwellwert aufweist.

Wenn der Schwellwert als mTol bezeichnet wird, und die Modulationsfunktionsverläufe mit $m_i$ für die i-te elektrische Phase bezeichnet werden, kann also jeder Zeitabschnitt als der mindestens eine bestimmte Zeitabschnitt bestimmt werden (d.h. als Modifikationszeitabschnitt bestimmt werden), in welchem für ein beliebiges i und ein beliebiges j gilt:

$$abs(m_i(t) - m_j(t)) \leq mTol.$$

Für den speziellen Fall mit drei elektrischen Phasen gibt es somit drei Modulationsfunktionsverläufe $m_1(t)$, $m_2(t)$ und $m_3(t)$, und jeder Zeitabschnitt wird als Modifikationszeitabschnitt bestimmt, in welchem gilt:

$$abs(m1(t)\text{-}m2(t) \leq mTol \,||\, abs(m1(t)\text{-}m3(t) \leq mTol \,||\, abs(m2(t)\text{-}m3(t) \leq mTol,$$

wobei das Zeichen "||" für "oder" steht.

Es versteht sich, dass die oben aufgeführte Formel auch für mehr als drei elektrische Phasen, beispielsweise für sechs oder neun elektrische Phasen, entsprechend angewendet werden kann.

Gemäß einer weiteren bevorzugten Weiterbildung umfasst das erfindungsgemäße Verfahren den Schritt: Bestimmen des Schwellwerts, mTol, basierend auf einem Drehmoment und/oder einer Drehzahl der mehrphasigen elektrischen Maschine. Das Bestimmen des Schwellwerts kann beispielsweise unter Verwendung einer vorgefertigten Lookup-Tabelle (Englisch: lookup table, LUT) erfolgen. Lookup-Tabellen, welche auch Umsetzungstabellen genannt werden, werden häufig in der Informatik und in der Digitaltechnik verwendet, um Informationen statisch zu definieren und diese zur Laufzeit eines Programms, zur Vermeidung aufwändiger Berechnungen oder hohen Speicherverbrauchs, zu benutzen. Eine Vorrichtung, welche zum Ausführen des erfindungsgemäßen Verfahrens ausgelegt ist, kann somit mit vergleichsweise geringeren Ressourcen ausgeführt werden.

Gemäß einer weiteren bevorzugten Weiterbildung umfasst das erfindungsgemäße Verfahren den Schritt: Bestimmen der modifizierten Schaltfrequenz basierend auf einem Drehmoment und/oder einer Drehzahl der mehrphasigen elektrischen Maschine. Das Bestimmen der modifizierten Schaltfrequenz kann beispielsweise unter Verwendung einer Lookup-Tabelle erfolgen. Auch hierdurch ist es möglich, aufwändige Berechnungen zu vermeiden und einen Arbeitsspeicherverbrauch zum Durchführen des Verfahrens zu reduzieren. Dementsprechend kann eine Vorrichtung zum Durchführen des erfindungsgemäßen Verfahrens mit geringeren Ressourcen auskommen bzw. mit weniger anspruchsvoller Hardware realisiert werden.

Gemäß einer weiteren bevorzugten Weiterbildung wird bei dem Erzeugen des Schaltsignals für jede der elektrischen Phasen in all denjenigen Zeitabschnitten, welche nicht innerhalb eines der Modifikationszeitabschnitte, das heißt nicht innerhalb des mindestens einen bestimmten Zeitabschnitts, liegen, die vorläufige Schaltfrequenz beibehalten.

Gemäß einer weiteren bevorzugten Weiterbildung ist die modifizierte Schaltfrequenz kleiner als die vorläufige Schaltfrequenz. Auf diese Weise können Schaltungsverluste minimiert werden.

Gemäß einer weiteren bevorzugten Weiterbildung wird für die Pulsbreitenmodulation eine Raumzeigermodulation oder eine Sinusmodulation eingesetzt.

Kurze Beschreibung der Zeichnungen

Die vorliegende Erfindung wird nachfolgend anhand der in den schematischen Figuren der Zeichnung dargestellten Ausführungsbeispiele näher erläutert. Es zeigen:

Fig. 1    ein schematisches Flussdiagramm zum Erläutern eines Verfahrens gemäß einer Ausführungsform der vorliegenden Erfindung;

Fig. 2    ein schematisches Blockdiagramm zum Erläutern einer Vorrichtung gemäß einer weiteren Ausführungsform der vorliegenden Erfindung; und

Fig. 3    eine schematische Darstellung von Modulationsfunktionsverläufen für eine dreiphasige elektrische Maschine.

Die Nummerierung von Verfahrensschritten dient der Übersichtlichkeit und soll insbesondere nicht, sofern nichts anderes angegeben ist, eine bestimmte zeitliche Reihenfolge implizieren. Insbesondere können auch mehrere Verfahrensschritte gleichzeitig durchgeführt werden.

Beschreibung der Ausführungsbeispiele

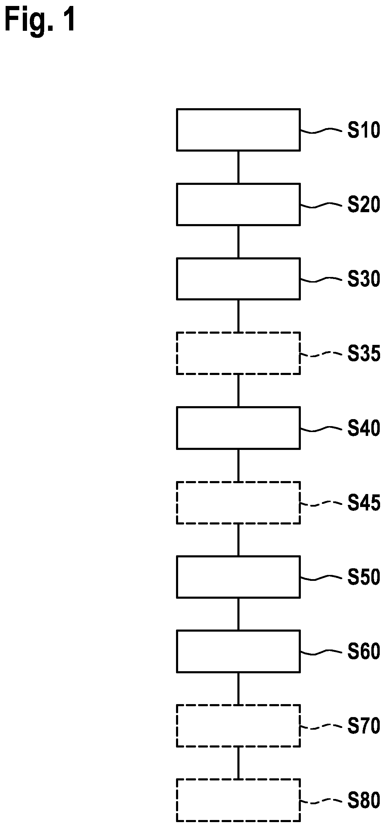

Fig. 1 zeigt ein schematisches Flussdiagramm zum Erläutern eines Verfahrens zum Betreiben einer mehrphasigen elektrischen Maschine gemäß einer Ausführungsform der vorliegenden Erfindung. Obgleich die Ausführungsbeispiele im Zusammenhang mit einer dreiphasigen elektrischen Maschine erläutert werden, versteht es sich, dass die genannten Elemente, Eigenschaften und Verfahrensschritte analog auch für mehrphasige elektrische Maschinen mit mehr als drei Phasen eingesetzt werden können (z.B. sechs- oder neunphasige elektrische Maschinen).

In einem Schritt S10 wird ein Arbeitspunkt der mehrphasigen elektrischen Maschine bestimmt. Wie im Stand der Technik bereits bekannt, kann der Arbeitspunkt insbesondere in Abhängigkeit von einer elektrischen Frequenz $f_{el}$ und/oder einem gewünschten oder aktuellen Drehmoment M und/oder einer Drehzahl der mehrphasigen elektrischen Maschine bestimmt werden. Bei der mehrphasigen elektrischen Maschine kann es sich insbesondere um einen elektrischen Antrieb, bevorzugt für ein Fahrzeug, besonders bevorzugt für ein HEV oder PHEV, handeln.

In einem Schritt S20 wird für eine Pulsbreitenmodulation für jede der elektrischen Phasen der mehrphasigen elektrischen Maschine eine vorläufige Schaltfrequenz $f_s$ bestimmt. Für die Pulsbreitenmodulation kann beispielsweise eine Raumzeigermodulation oder eine Sinusmodulation verwendet werden. Die vorläufige Schaltfrequenz wird in Abhängigkeit von dem bestimmten Arbeitspunkt der mehrphasigen elektrischen Maschine bestimmt, wobei beispielsweise eine Lookup-Tabelle verwendet werden kann.

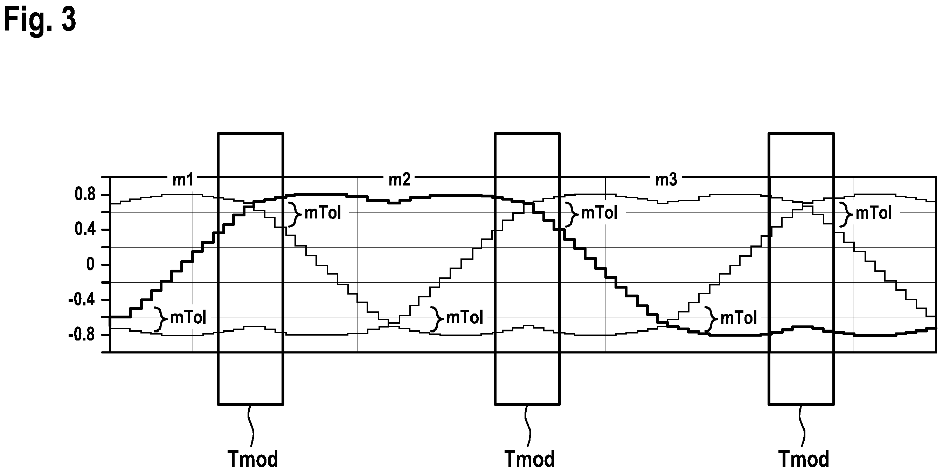

In einem Schritt S30 wird je ein Modulationsfunktionsverlauf (in Abhängigkeit von der Zeit) für eine jeweilige Pulsbreitenmodulation für jede der elektrischen Phasen der mehrphasigen elektrischen Maschine bestimmt. Zur Erläuterung solcher bestimmten Modulationsfunktionsverläufe für die Pulsbreitenmodulation für jede der elektrischen Phasen der mehrphasigen elektrischen Maschine sind in Fig. 3 dargestellt.

In Fig. 3 bezeichnet m1 den zeitlichen Modulationsfunktionsverlauf für eine erste elektrische Phase, m2 den zeitlichen Modulationsfunktionsverlauf für eine zweite elektrische Phase und m3 den zeitlichen Modulationsfunktionsverlauf für eine dritte elektrische Phase.

Das Bestimmen der Modulationsfunktionsverläufe kann so erfolgen wie dies auch bisher im Stand der Technik üblicherweise erfolgt.

In einem Schritt S40 wird nun mindestens ein Zeitabschnitt Tmod in den Modulationsfunktionsverläufen m1, m2, m3 in Abhängigkeit von den Werten der vorläufigen Modulationsfunktionsverläufe m1(t), m2(t), m3(t) bestimmt, d.h. identifiziert und ausgewählt. Der mindestens eine bestimmte Zeitabschnitt Tmod kann auch als Modifikationszeitabschnitt Tmod bezeichnet werden, denn in diesem Zeitabschnitt oder in diesen Zeitabschnitten wird später die vorläufige Schaltfrequenz verändert werden.

Bevorzugt erfolgt das Bestimmen des Modifikationszeitabschnitts Tmod bzw. der Modifikationszeitabschnitte Tmod derart, dass jeder Zeitabschnitt als ein Modifikationszeitabschnitt Tmod bestimmt wird, in welchem eine beliebige Differenz zwischen zwei beliebigen Modulationsfunktionsverläufen m1, m2, m3 einen Betrag kleiner oder gleich einem Schwellwert mTol aufweist. Mit anderen Worten:
Jeder Zeitpunkt t wird als zu einem Modifikationszeitabschnitt Tmod zugehörig bestimmt, in welchem gilt:
$abs(m1(t)-m2(t) \leq mTol \parallel abs(m1(t)-m3(t) \leq mTol \parallel abs(m2(t)-m3(t) \leq mTol$, wobei das Zeichen "||" für "oder" steht, und wobei jeder Modifikationszeitabschnitt Tmod durch die Gesamtheit der als zu ihm gehörig bestimmten zusammenhängenden Zeitpunkte t definiert wird.

Der Schwellwert mTol kann vorbestimmt und fix sein, wobei der Schwellwert mTol auf die jeweilige zu betreibende mehrphasige elektrische Maschine hin optimiert sein kann. Alternativ kann vorgesehen sein, dass in einem optionalen Schritt S35 der Schwellwert mTol basierend auf einem Drehmoment und/oder einer Drehzahl der mehrphasigen elektrischen Maschine bestimmt wird, beispielsweise unter Verwendung einer Lookup-Tabelle. In diesem Fall kann der Schwellwert mTol bevorzugt für jede Schaltperiode $1/f_{el}$ neu bestimmt werden.

In einem Schritt S50 wird in dem mindestens einen bestimmten Zeitabschnitt, das heißt in dem bestimmten Modifikationszeitabschnitt Tmod oder den mehreren bestimmten Modifikationszeitabschnitten Tmod, die vorläufige Schaltfrequenz der Pulsbreitenmodulation hin zu einer modifizierten Schaltfrequenz verändert. Bei der modifizierten Schaltfrequenz kann es sich insbesondere um eine Schaltfrequenz handeln, welche kleiner ist als die vorläufige Schaltfrequenz, so dass in den Modifikationszeitabschnitten Tmod geringere Schaltungsverluste ergeben.

Vorteilhaft wird in allen Modifikationszeitabschnitten die vorläufige Schaltfrequenz zu der modifizierten Schaltfrequenz hin verändert, während in allen Zeitabschnitten, welche nicht Modifikationszeitabschnitte Tmod sind, das heißt welche nicht mit einem beliebigen Modifikationszeitabschnitt Tmod überlappen, die ursprüngliche, vorläufige Schaltfrequenz beibehalten wird.

Auf diese Weise werden die Schaltungsverluste minimiert in Zeitabschnitten, in welchen eine reduzierte Schaltfrequenz geringe Auswirkungen hat, während in den übrigen Zeitabschnitten, wo sich eine Reduzierung der Schaltfrequenz stärker auswirken würde, die zuvor bestimmte vorläufige Schaltfrequenz verwendet wird, welche auf den bestimmten Arbeitspunkt hin optimiert wurde. Somit lässt sich insgesamt eine vorteilhafte Balance zwischen den Bestrebungen einerseits nach besonders präzise realisierten Modulationsfunktionsverläufen für die Pulsbreitenmodulation und andererseits möglichst geringen Schaltungsverlusten eingestellt werden.

Das Bestimmen der Modifikationszeitabschnitte Tmod kann dadurch erfolgen, dass bei Vorliegen der oben genannten Bedingungen zum Bestimmen der Modifikationszeitabschnitte Tmod eine Flagge gesetzt wird (beispielsweise ein Flaggenbit von 0 auf 1 gesetzt wird), wobei die aktivierte Flagge (zum Beispiel das Flaggenbit) bedeutet, dass ein Modifikationszeitabschnitt Tmod vorliegt und eine nicht aktivierte Flagge (zum Beispiel ein auf 0 gesetztes Flaggenbit) bedeutet, dass kein Modifikationszeitabschnitt Tmod vorliegt, das heißt, dass die ursprüngliche vorläufige Schaltfrequenz zu verwenden ist.

Die modifizierte Schaltfrequenz kann fest vorgegeben sein, beispielsweise als ein Absolutwert. Alternativ kann die modifizierte Schaltfrequenz als ein fest vorgegebener Relativwert bestimmt sein, beispielsweise als ein vorbestimmter Prozentsatz der jeweiligen bestimmten vorläufigen Schaltfrequenz. Mit anderen Worten kann vorgesehen sein, dass in dem Schritt S50 die vorläufige Schaltfrequenz innerhalb der Modifikationszeitabschnitte Tmod jeweils auf einen vorbestimmten Prozentsatz der vorläufigen Schaltfrequenz gesenkt wird. Bei dem vorbestimmten Prozentsatz kann es sich beispielsweise um einen Prozentsatz von 75 % oder weniger, bevorzugt von 50 % oder weniger, besonders bevorzugt von 25 % oder weniger handeln.

Alternativ kann auch vorgesehen sein, dass die modifizierte Schaltfrequenz in einem optionalen Schritt S45 bestimmt wird, beispielsweise in Abhängigkeit von einem Drehmoment und/oder von einer Drehzahl der mehrphasigen elektrischen Maschine. Besonders bevorzugt ist eine Lookup-Tabelle vorgesehen, in welcher Werte für die modifizierte Schaltfrequenz jeweils in Abhängigkeit von dem Drehmoment und/oder von der Drehzahl der mehrphasigen elektrischen Maschine vorgegeben sind.

Die modifizierte Schaltfrequenz, welche auch als optimierte Schaltfrequenz bezeichenbar ist, kann außerdem in Abhängigkeit von weiteren Parametern bestimmt werden oder kann unter Verwendung einer Lookup-Tabelle bestimmt werden, welche weitere Parameter enthält, beispielsweise den Schwellwert, insbesondere wenn der optionale Verfahrensschritt S35 zum Bestimmen des Schwellwerts mTol durchgeführt wird. Falls die modifizierte Schaltfrequenz nicht fix ist, kann diese bevorzugt für jede Schaltperiode $1/f_{el}$ erneut bestimmt werden.

In einem Schritt S60 wird für jede der elektrischen Phasen durch Pulsbreitenmodulation ein Schaltsignal erzeugt, und zwar basierend auf den bestimmten Modulationsfunktionsverläufen unter Verwendung der modifizierten Schaltfrequenz in dem mindestens einen bestimmten Zeitabschnitt, das heißt in dem Modifikationszeitabschnitt Tmod oder in den Modifikationszeitabschnitten Tmod.

Der Übergang zwischen der ursprünglichen, vorläufigen Schaltfrequenz und der modifizierten Schaltfrequenz erfolgt vorteilhaft symmetrisch, so dass keine Sprünge in Schaltvorgängen vorliegen. Mit anderen Worten erfolgt der Übergang bevorzugt, wenn ein Nullzeiger gestellt wird.

Es versteht sich, dass die erzeugten Schaltsignale nach ihrer Erzeugung an eine Schaltungseinrichtung zum Realisieren der Modulationsfunktionsverläufe (optionaler Schritt S70) durch die entsprechende Pulsbreitenmodulation gesendet werden können, und dass die mehrphasige elektrische Maschine unter Verwendung der realisierten Modulationsfunktionsverläufe betrieben werden kann (optionaler Schritt S80).

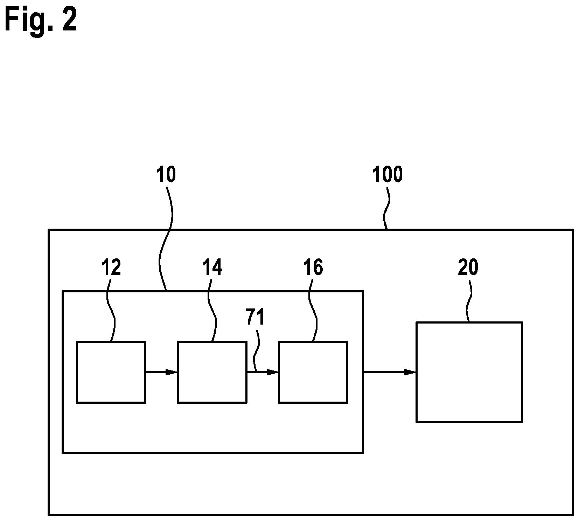

Fig. 2 zeigt ein schematisches Blockschaltbild zum Erläutern einer Vorrichtung 10 zum Betreiben einer mehrphasigen elektrischen Maschine 20 gemäß einer weiteren Ausführungsform der vorliegenden Erfindung.

Die Vorrichtung 10 umfasst eine Recheneinrichtung 12, eine Schaltungseinrichtung 16 sowie eine Signalerzeugungseinrichtung 14.

Die Recheneinrichtung 10 ist ausgebildet zum Durchführen der Verfahrensschritte S10 bis S50, wahlweise inklusive der optionalen Verfahrensschritte S35 und S45, wie im Voranstehenden mit Bezug auf Fig. 1 beschrieben. Die Signalerzeugungseinrichtung 14 ist zum Durchführen des Verfahrensschritts S60 wie im Voranstehenden beschrieben ausgebildet, das heißt, zum Erzeugen eines Schaltsignals 71 für die Schaltungseinrichtung 16 für die Pulsbreitenmodulation für jede der elektrischen Phasen basierend auf den bestimmten Modulationsfunktionsverläufen unter Verwendung der modifizierten Schaltfrequenz in dem mindestens einen bestimmten Zeitabschnitt, das heißt in dem bestimmten Modifikationszeitabschnitt oder den bestimmten Modifikationszeitabschnitten.

Die Schaltungseinrichtung 16 ist dazu ausgebildet, die Modulationsfunktionsverläufe m1, m2, m3 für jede der elektrischen Phasen der mehrphasigen elektrischen Maschine 20 durch die Pulsbreitenmodulation basierend auf den von der Signalerzeugungseinrichtung 14 erzeugten Schaltsignalen 71 zu realisieren (siehe Schritt S70 im Voranstehenden). Die mehrphasige elektrische Maschine 20 kann mit der Vorrichtung 10 so gekoppelt sein, dass die mehrphasige elektrische Maschine mit den realisierten Modulationsfunktionsverläufen betrieben wird.

In Fig. 2 ist außerdem dargestellt, dass weiterhin auch ein System 100 bereitgestellt wird welches die erfindungsgemäße Vorrichtung 10 sowie die mittels der Vorrichtung 10 betriebene mehrphasige elektrische Maschine 20 umfasst. Bei dem System 100 kann es sich insbesondere um ein Elektrofahrzeug (EV), besonders bevorzugt um ein Hybridfahrzeug (HEV), ganz besonders bevorzugt um ein Plug-in-Hybridfahrzeug (PHEV) handeln. Bei dem Realisieren S70 der Modulationsfunktionsverläufe werden insbesondere die entsprechenden Tastgrade (oder Aussteuergrade, Englisch "duty factor" oder "duty cycle") als Schaltsignale 71 an einzelne Schalter als Teil der Schaltungseinrichtung 16 ausgegeben.

Bei der Recheneinrichtung kann es sich insbesondere um einen Mikrocontroller, eine anwendungsspezifische integrierte Schaltung (Englisch "application-specific integrated circuit", ASIC) handeln. Die Schaltungseinrichtung 16 kann insbesondere in Zweipunkttechnik oder Mehrpunkttechnik ausgeführt sein. Die Schaltungseinrichtung 16 kann insbesondere einen Brückenzweig mit zwei in Reihe geschalteten Schaltelementen für jede der elektrischen Phasen der mehrphasigen elektrischen Maschine aufweisen, wobei insbesondere eine Mittelpunktschaltung verwendet werden kann.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Ein Kerngedanke der Erfindung besteht darin, dass die Schaltfrequenz für eine Pulsbreitenmodulation für einen Betrieb einer mehrphasigen elektrischen Maschine nicht über eine Schaltperiode $1/f_{el}$ hinweg fest ist, sondern zumindest einmal modifiziert wird, bevorzugt für einen bestimmten Zeitabschnitt ("Modifikationszeitabschnitt") verringert wird.

**Patentansprüche**

1. Verfahren zum Betreiben einer mehrphasigen elektrischen Maschine (20), mit den Schritten:

    Bestimmen eines Arbeitspunkts der mehrphasigen elektrischen Maschine (20);
    Bestimmen, für eine Pulsbreitenmodulation für jede der elektrischen Phasen der mehrphasigen elektrischen Maschine (20), einer vorläufigen Schaltfrequenz in Abhängigkeit von dem bestimmten Arbeitspunkt der mehrphasigen elektrischen Maschine (20);
    Bestimmen je eines Modulationsfunktionsverlaufs (m1, m2, m3) für die Pulsbreitenmodulation für jede der elektrischen Phasen der mehrphasigen elektrischen Maschine (20);
    Bestimmen mindestens eines Zeitabschnitts (Tmod) in den Modulationsfunktionsverläufen (m1, m2, m3) in Abhängigkeit von den Werten der vorläufigen Modulationsfunktionsverläufe in dem Zeitabschnitt (Tmod);
    Verändern der vorläufigen Schaltfrequenz der Pulsbreitenmodulation hin zu einer modifizierten Schaltfrequenz in dem mindestens einen bestimmten Zeitabschnitt (Tmod); und
    Erzeugen eines Schaltsignals (71) für jede der elektrischen Phasen durch Pulsbreitenmodulation basierend auf den bestimmten Modulationsfunktionsverläufen (m1, m2, m3) unter Verwendung der modifizierten Schaltfrequenz in dem mindestens einen bestimmten Zeitabschnitt (Tmod),

    **dadurch gekennzeichnet, dass**
    das Bestimmen des mindestens einen Zeitabschnitts (Tmod) basierend auf mindestens einer Differenz zwischen mindestens zwei Modulationsfunktionsverläufen (m1, m2, m3) erfolgt.

2. Verfahren nach Anspruch 1, wobei das Bestimmen des mindestens einen Zeitabschnitts (Tmod) basierend auf allen Differenzen zwischen je zwei Modulationsfunktionsverläufen (m1, m2, m3) erfolgt.

3. Verfahren nach Anspruch 2, wobei jeder Zeitabschnitt (Tmod) bestimmt wird, in welchem eine beliebige Differenz zwischen zwei beliebigen Modulationsfunktionsverläufen (m1, m2, m3) einen Betrag kleiner gleich einem Schwellwert (mTol) aufweist.

4. Verfahren nach Anspruch 3, mit dem Schritt:
    Bestimmen des Schwellwerts (mTol) basierend auf Drehmoment und/oder Drehzahl der mehrphasigen elektrischen Maschine (20).

5. Verfahren nach einem der Ansprüche 1 bis 4, mit dem Schritt:
    Bestimmen der modifizierten Schaltfrequenz basierend auf Drehmoment und/oder Drehzahl der mehrphasigen elektrischen Maschine (20).

6. Verfahren nach einem der Ansprüche 1 bis 5,
    wobei bei dem Erzeugen des Schaltsignals (71) für jede der elektrischen Phasen in Zeitabschnitten (Tmod) außerhalb des mindestens einen bestimmten Zeitabschnitts (Tmod) die vorläufige Schaltfrequenz beibehalten wird.

7. Verfahren nach einem der Ansprüche 1 bis 6,
    wobei die modifizierte Schaltfrequenz kleiner als die vorläufige Schaltfrequenz ist.

**8.** Verfahren nach einem der Ansprüche 1 bis 7,
wobei für die Pulsbreitenmodulation eine Raumzeigermodulation oder eine Sinusmodulation eingesetzt wird.

**9.** Vorrichtung (10) zum Betreiben einer mehrphasigen elektrischen Maschine (20), mit:
einer Recheneinrichtung (12), welche ausgebildet ist zum: (20);

Bestimmen eines Arbeitspunkts der mehrphasigen elektrischen Maschine
Bestimmen, für eine Pulsbreitenmodulation für jede der elektrischen Phasen der mehrphasigen elektrischen Maschine (20), einer vorläufigen Schaltfrequenz in Abhängigkeit von dem bestimmten Arbeitspunkt der mehrphasigen elektrischen Maschine (20);
Bestimmen je eines Modulationsfunktionsverlaufs (m1, m2, m3) für die Pulsbreitenmodulation für jede der elektrischen Phasen der mehrphasigen elektrischen Maschine (20);
Bestimmen mindestens eines Zeitabschnitts (Tmod) in den Modulationsfunktionsverläufen (m1, m2, m3) in Abhängigkeit von den Werten der vorläufigen Modulationsfunktionsverläufe in dem Zeitabschnitt (Tmod);
Verändern der vorläufigen Schaltfrequenz der Pulsbreitenmodulation hin zu einer modifizierten Schaltfrequenz in dem mindestens einen bestimmten Zeitabschnitt (Tmod);
einer Schaltungseinrichtung (16), welche dazu ausgebildet ist, den Modulationsfunktionsverlauf für jede der elektrischen Phasen der mehrphasigen elektrischen Maschine (20) durch die Pulsbreitenmodulation zu realisieren; und
einer Signalerzeugungseinrichtung (14) zum Erzeugen eines Schaltsignals (71) für die Schaltungseinrichtung (14) für die Pulsbreitenmodulation für jede der elektrischen Phasen basierend auf den bestimmten Modulationsfunktionsverläufen (m1, m2, m3) unter Verwendung der modifizierten Schaltfrequenz in dem mindestens einen bestimmten Zeitabschnitt (Tmod),

**dadurch gekennzeichnet, dass**
das Bestimmen des mindestens einen Zeitabschnitts (Tmod) basierend auf mindestens einer Differenz zwischen mindestens zwei Modulationsfunktionsverläufen (m1, m2, m3) erfolgt.

**Claims**

**1.** Method for operating a multiphase electrical machine (20), having the steps of:

determining an operating point of the multiphase electrical machine (20);
determining, for pulse width modulation for each of the electrical phases of the multiphase electrical machine (20), a provisional switching frequency depending on the determined operating point of the multiphase electrical machine (20);
determining a respective modulation function profile (m1, m2, m3) for the pulse width modulation for each of the electrical phases of the multiphase electrical machine (20) ;
determining at least one time period (Tmod) in the modulation function profiles (m1, m2, m3) depending on the values of the provisional modulation function profiles in the time period (Tmod);
changing the provisional switching frequency of the pulse width modulation to a modified switching frequency in the at least one determined time period (Tmod); and
generating a switching signal (71) for each of the electrical phases through pulse width modulation based on the determined modulation function profiles (m1, m2, m3) using the modified switching frequency in the at least one determined time period (Tmod), **characterized in that**
the at least one time period (Tmod) is determined based on at least one difference between at least two modulation function profiles (m1, m2, m3).

**2.** Method according to Claim 1,
wherein the at least one time period (Tmod) is determined based on all of the differences between two respective modulation function profiles (m1, m2, m3).

**3.** Method according to Claim 2,
wherein each time period (Tmod) in which any difference between any two modulation function profiles (m1, m2, m3) has a value less than or equal to a threshold value (mTol) is determined.

**4.** Method according to Claim 3, having the step of:

determining the threshold value (mTol) based on the torque and/or speed of the multiphase electrical machine (20) .

**5.** Method according to one of Claims 1 to 4, having the step of:
determining the modified switching frequency based on the torque and/or speed of the multiphase electrical machine (20) .

**6.** Method according to one of Claims 1 to 5,
wherein, when the switching signal (71) is generated, the provisional switching frequency is retained for each of the electrical phases in time periods (Tmod) outside the at least one determined time period (Tmod).

**7.** Method according to one of Claims 1 to 6,
wherein the modified switching frequency is smaller than the provisional switching frequency.

**8.** Method according to one of Claims 1 to 7,
wherein space vector modulation or sine modulation is used for the pulse width modulation.

**9.** Device (10) for operating a multiphase electrical machine (20), having:
a computing apparatus (12), that is designed to:

determine an operating point of the multiphase electrical machine (20);
determine, for pulse width modulation for each of the electrical phases of the multiphase electrical machine (20), a provisional switching frequency depending on the determined operating point of the multiphase electrical machine (20);
determine a respective modulation function profile (m1, m2, m3) for the pulse width modulation for each of the electrical phases of the multiphase electrical machine (20) ;
determine at least one time period (Tmod) in the modulation function profiles (m1, m2, m3) depending on the values of the provisional modulation function profiles in the time period (Tmod);
change the provisional switching frequency of the pulse width modulation to a modified switching frequency in the at least one determined time period (Tmod);
a circuit apparatus (16) that is designed to implement the modulation function profile for each of the electrical phases of the multiphase electrical machine (20) through pulse width modulation; and
a signal generation apparatus (14) for generating a switching signal (71) for the circuit apparatus (16) for the pulse width modulation for each of the electrical phases based on the determined modulation function profiles (m1, m2, m3) using the modified switching frequency in the at least one determined time period (Tmod),
**characterized in that**
the at least one time period (Tmod) is determined based on at least one difference between at least two modulation function profiles (m1, m2, m3).

**Revendications**

**1.** Procédé permettant de faire fonctionner une machine électrique polyphasée (20), comprenant les étapes consistant à :

déterminer un point de fonctionnement de la machine électrique polyphasée (20) ;
déterminer, pour une modulation de largeur d'impulsion pour chacune des phases électriques de la machine électrique polyphasée (20), une fréquence de commutation provisoire en fonction du point de fonctionnement déterminé de la machine électrique polyphasée (20) ;
déterminer respectivement une courbe de fonction de modulation (m1, m2, m3) pour la modulation de largeur d'impulsion pour chacune des phases électriques de la machine électrique polyphasée (20) ;
déterminer au moins une période de temps (Tmod) dans les courbes de fonction de modulation (m1, m2, m3) en fonction des valeurs des courbes de fonction de modulation provisoires dans la période de temps (Tmod) ;
modifier la fréquence de commutation provisoire de la modulation de largeur d'impulsion jusqu'à une fréquence de commutation modifiée dans ladite au moins une période de temps (Tmod) déterminée ; et
générer un signal de commutation (71) pour chacune des phases électriques par modulation de largeur d'impulsion sur la base des courbes de fonction de modulation (m1, m2, m3) déterminées en utilisant la fréquence de commutation modifiée dans ladite au moins une période de temps (Tmod) déterminée,
**caractérisé en ce que** la détermination de ladite au moins une période de temps (Tmod) est effectuée sur la base d'au moins une différence entre au moins deux courbes de fonction de modulation (m1, m2, m3).

2. Procédé selon la revendication 1, dans lequel la détermination de ladite au moins une période de temps (Tmod) est effectuée sur la base de toutes les différences entre respectivement deux courbes de fonction de modulation (m1, m2, m3).

3. Procédé selon la revendication 2, dans lequel chaque période de temps (Tmod) est déterminée dans laquelle une différence quelconque entre deux courbes de fonction de modulation (m1, m2, m3) quelconques présente un montant inférieur ou égal à une valeur seuil (mTol).

4. Procédé selon la revendication 3, comprenant l'étape consistant à :
déterminer la valeur seuil (mTol) sur la base du couple et/ou de la vitesse de rotation de la machine électrique polyphasée (20).

5. Procédé selon l'une quelconque des revendications 1 à 4, comprenant l'étape consistant à :
déterminer la fréquence de commutation modifiée sur la base du couple et/ou de la vitesse de rotation de la machine électrique polyphasée (20).

6. Procédé selon l'une quelconque des revendications 1 à 5, dans lequel, lorsque le signal de commutation (71) est généré pour chacune des phases électriques dans des périodes de temps (Tmod) en dehors de ladite au moins une période de temps (Tmod) déterminée, la fréquence de commutation provisoire est maintenue.

7. Procédé selon l'une quelconque des revendications 1 à 6, dans lequel la fréquence de commutation modifiée est inférieure à la fréquence de commutation provisoire.

8. Procédé selon l'une quelconque des revendications 1 à 7, dans lequel une modulation de vecteur spatial ou une modulation sinusoïdale est mise en œuvre pour la modulation de largeur d'impulsion.

9. Dispositif (10) permettant de faire fonctionner une machine électrique polyphasée (20), comprenant :
un dispositif de calcul (12) qui est réalisé pour :

déterminer un point de fonctionnement de la machine électrique polyphasée (20) ;
déterminer, pour une modulation de largeur d'impulsion pour chacune des phases électriques de la machine électrique polyphasée (20), une fréquence de commutation provisoire en fonction du point de fonctionnement déterminé de la machine électrique polyphasée (20) ;
déterminer respectivement une courbe de fonction de modulation (m1, m2, m3) pour la modulation de largeur d'impulsion pour chacune des phases électriques de la machine électrique polyphasée (20) ;
déterminer au moins une période de temps (Tmod) dans les courbes de fonction de modulation (m1, m2, m3) en fonction des valeurs des courbes de fonction de modulation provisoires dans la période de temps (Tmod) ;
modifier la fréquence de commutation provisoire de la modulation de largeur d'impulsion jusqu'à une fréquence de commutation modifiée dans ladite au moins une période de temps (Tmod) déterminée ;
un dispositif de commutation (16) qui est réalisé pour réaliser la courbe de fonction de modulation pour chacune des phases électriques de la machine électrique polyphasée (20) par la modulation de largeur d'impulsion ; et
un dispositif de génération de signal (14) destiné à générer un signal de commutation (71) pour le dispositif de commutation (16) en vue de la modulation de largeur d'impulsion pour chacune des phases électriques sur la base des courbes de fonction de modulation (m1, m2, m3) déterminées en utilisant la fréquence de commutation modifiée dans ladite au moins une période de temps (Tmod) déterminée,
**caractérisé en ce que** la détermination de ladite au moins une période de temps (Tmod) est effectuée sur la base d'au moins une différence entre au moins deux courbes de fonction de modulation (m1, m2, m3).

# Fig. 1

```
┌──────────────┐
│              │──── S10
└──────────────┘
        │
┌──────────────┐
│              │──── S20
└──────────────┘
        │
┌──────────────┐
│              │──── S30
└──────────────┘
        │
┌ ─ ─ ─ ─ ─ ─ ┐
                ─── S35
└ ─ ─ ─ ─ ─ ─ ┘
        │
┌──────────────┐
│              │──── S40
└──────────────┘
        │
┌ ─ ─ ─ ─ ─ ─ ┐
                ─── S45
└ ─ ─ ─ ─ ─ ─ ┘
        │
┌──────────────┐
│              │──── S50
└──────────────┘
        │
┌──────────────┐
│              │──── S60
└──────────────┘
        │
┌ ─ ─ ─ ─ ─ ─ ┐
                ─── S70
└ ─ ─ ─ ─ ─ ─ ┘
        │
┌ ─ ─ ─ ─ ─ ─ ┐
                ─── S80
└ ─ ─ ─ ─ ─ ─ ┘
```

# Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012220247 A1
- EP 0658969 A2
- US 2006267542 A1
- JP 2009100613 A
- US 2010007300 A1
- US 2017349059 A1
- US 2012212167 A1
- US 2014070755 A1

**In der Beschreibung aufgeführte Nicht-Patentliteratur**

- **JOACHIM SPECOVIUS.** Grundkurs Leistungselektronik: Bauelemente, Schaltungen und Systeme. Springer Vieweg, 24. Januar 2017